# EUROPEAN PATENT APPLICATION

(11) **EP 4 685 726 A2**
(43) Date of publication of application: **28.01.2026**
(21) Application number: 25221977.9
(22) Date of filing: 07.02.2023
(51) Int. Cl.: G06Q 40/04

(54) **SYSTEMS AND METHODS FOR TRANSACTION SETTLEMENT PREDICTION**

(30) Priority: 08.02.2022 IN 202211006618; 26.09.2022 US 202217935506
(62) Divisional of application: 23709892.6
(71) Applicant: Fidelity Information Services, LLC, Jacksonville, Florida 32204 (US)
(72) Inventor: WELLMANN, Benjamin, Jacksonville, 32204 (US); SHIRADHONKAR, Mayur, Jacksonville, 32204 (US)
(74) Representative: Patel, Nikesh

(57) **Abstract**

A computer-implemented method for transaction settlement prediction may include receiving one or more parameters for a subject financial trade among a plurality of recently executed financial trades, determining a likelihood that the subject financial trade will fail using a trained machine learning model, determining a most likely reason that the subject financial trade will fail using the trained machine learning model, presenting the likelihood that the subject financial trade will fail and the most likely reason that the subject financial trade will fail to a user, determining whether the subject financial trade has settled, wherein if the subject financial trade has not settled, pausing a specified period of time, updating the likelihood that the subject financial trade will fail using the trained machine learning model, and updating the most likely reason that the subject financial trade will fail using the trained machine learning model, wherein if the subject financial trade has settled, adding the trade to data for a plurality of past financial trades.

## Description

### CROSS-REFERENCE TO RELATED APPLICATION

This application claims the benefit of priority to U.S. Application No. 17/935,506 filed on September 26, 2022, which claims the benefit of priority to Indian Application No. 202211006618 filed on February 8, 2022, which are incorporated herein by reference in their entirety.

### TECHNICAL FIELD

Various embodiments of the present disclosure relate generally to processing financial trades and, more particularly, to predictions of trade settlement failures.

### BACKGROUND

Capital markets firms have an increasing volume in complex and high-risk trades, such as in equity and derivative markets. Some of such trades may result in failed settlements due to various factors and may require in-depth monitoring and tracking to prevent a failure in settlement. These potential issues may require support team agents to monitor and track trades on an ongoing basis, which is both time intensive and expensive for capital markets firms. For example, non-automated monitoring of a broad number of trades still pending settlement, if conducted without insight into which trades are most likely to result in failed settlements, may result in resources expended post-execution on trades that fail to settle, or may result in resources expended in monitoring trades that were not in danger of failing to settle. These resources may include manual labor and technical resources (computing time, memory, and other storage) employed during the settlement monitoring and mitigation process.

The present disclosure is directed to overcoming one or more of these above-referenced challenges.

### SUMMARY OF THE DISCLOSURE

According to certain aspects of the present disclosure, systems and methods are disclosed for transaction settlement prediction.

In one embodiment, a computer-implemented method is disclosed for transaction settlement prediction, the method comprising: receiving one or more parameters for a subject financial trade among a plurality of recently executed financial trades, determining a likelihood that the subject financial trade will fail using a trained machine learning model, determining a most likely reason that the subject financial trade will fail using the trained machine learning model, presenting the likelihood that the subject financial trade will fail and the most likely reason that the subject financial trade will fail to a user; pausing a specified period of time; determining whether the subject financial trade has settled; wherein if the subject financial trade has not settled: updating the likelihood that the subject financial trade will fail using the trained machine learning model; and updating the most likely reason that the subject financial trade will fail using the trained machine learning model; wherein if the subject financial trade has settled: adding the trade to data for a plurality of past financial trades.

In accordance with another embodiment, a system is disclosed for transaction settlement prediction, the system comprising: a data storage device storing instructions for transaction settlement prediction in an electronic storage medium; and a processor configured to execute the instructions to perform a method including: receiving one or more parameters for a subject financial trade among a plurality of recently executed financial trades, determining a likelihood that the subject financial trade will fail using a trained machine learning model, determining a most likely reason that the subject financial trade will fail using the trained machine learning model; presenting the likelihood that the subject financial trade will fail and the most likely reason that the subject financial trade will fail to a user; pausing a specified period of time; determining whether the subject financial trade has settled; wherein if the subject financial trade has not settled: updating the likelihood that the subject financial trade will fail using the trained machine learning model; and updating the most likely reason that the subject financial trade will fail using the trained machine learning model; wherein if the subject financial trade has settled: adding the trade to data for a plurality of past financial trades.

In accordance with another embodiment, a non-transitory machine-readable medium storing instructions that, when executed by the a computing system, causes the computing system to perform a method for transaction settlement prediction, the method including: receiving one or more parameters for a subject financial trade among a plurality of recently executed financial trades, determining a likelihood that the subject financial trade will fail using a trained machine learning model, determining a most likely reason that the subject financial trade will fail using the trained machine learning model, presenting the likelihood that the subject financial trade will fail and the most likely reason that the subject financial trade will fail to a user; pausing a specified period of time; determining whether the subject financial trade has settled; wherein if the subject financial trade has not settled: updating the likelihood that the subject financial trade will fail using the trained machine learning model; and updating the most likely reason that the subject financial trade will fail using the trained machine learning model; wherein if the subject financial trade has settled: adding the trade to data for a plurality of past financial trades.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1A depicts a machine learning framework for transaction settlement prediction, according to one or more embodiments.
FIG. 1B depicts an exemplary system infrastructure for transaction settlement prediction, according to one or more embodiments.
FIG. 2 depicts data relating to failed transaction settlements in a system for transaction settlement prediction, according to one or more embodiments.
FIG. 3 depicts a data model in a system for transaction settlement prediction, according to one or more embodiments.
FIG. 4 depicts a process flow of machine learning model training in a system for transaction settlement prediction, according to one or more embodiments.
FIG. 5 depicts a machine learning model performance in a system for transaction settlement prediction, according to one or more embodiments.
FIG. 6 depicts a flowchart of a method of transaction settlement prediction, according to one or more embodiments.
FIGS. 7-9 depict user interfaces presenting at-risk transaction settlements in a system for transaction settlement prediction, according to one or more embodiments.

### DETAILED DESCRIPTION OF EMBODIMENTS

Various embodiments of the present disclosure relate generally to enabling voice control of an interactive audiovisual environment, and monitoring user behavior to assess engagement.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section.

As discussed above, capital markets firms have an increasing volume in complex and high-risk trades, such as in equity and derivative markets. Some of such trades may result in failed settlements due to various factors and may require in-depth monitoring and tracking to prevent a failure in settlement. These potential issues may require support team agents to monitor and track trades on an ongoing basis, which is both time intensive and expensive for capital markets firms. For example, non-automated monitoring of a broad number of trades still pending settlement, if conducted without insight into which trades are most likely to result in failed settlements, may result in resources expended post-execution on trades that fail to settle, or may result in resources expended in monitoring trades that were not in danger of failing to settle. As discussed below, one or more embodiments are directed to overcoming one or more of these challenges. In particular, one or more embodiments may generate an estimated probability that a particular transaction may fail to settle, as well as a most likely reason for such a failure. By providing a prediction that a financial trade has a high likelihood of failing to settle, one or more embodiments may, for example, provide an alert to a broker/dealer to prompt action by the broker/dealer, may reduce financial risk to the broker/dealer, and may provide for earlier detection of at-risk trade. By providing a prediction of a most likely reason that a financial trade may fail to settle may, for example, provide for expedited mitigation of the potential failure, pointers for investigation of potentially as-risk trades, a reduction of cyclic impact of the trade settlement process, and trade failure analytics. These benefits may further provide the broker/dealer with, for example, reduced trade processing costs, automated and manual cost savings, reduced borrowing costs, improved reputation, and improved funding projections. The resources conserved through such predictions may include manual labor and technical resources (computing time, memory, and other storage) employed during the settlement monitoring and mitigation process. The expended resources may be reduced for trades that have a low likelihood of settlement failure and, thus, do not require monitoring or mitigation.

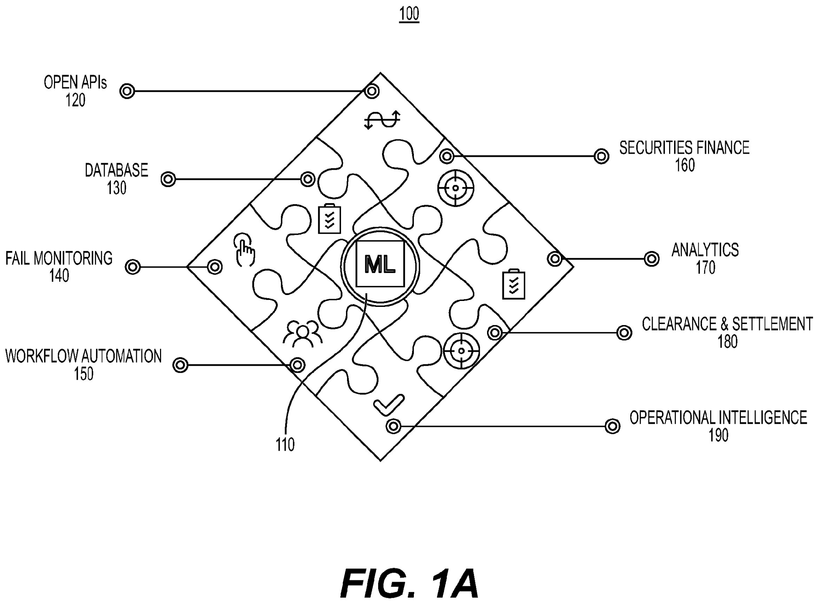

One or more embodiments may employ a machine learning model to predict the probability that a particular transaction may fail to settle and most likely reason for such a failure. FIG. 1A depicts a machine learning framework for transaction settlement prediction, according to one or more embodiments. As shown in FIG. 1A, machine learning module 110 may interact with other modules in a framework for transaction settlement prediction. For example, such a framework may include: open application programming interfaces (APIs) 120 that may provide programmatic access to trade details and prediction data via an API, database 130 that may provide access to trades, predictions, and history and that may be used as an information source for applications, fail monitoring module 140 that may provide expand functionality by offering a fail prediction service, workflow automation module 150 that may automatically assign critical predictions to users for monitoring, tracking, and other actions as well as workflow management of trade monitoring tasks, securities finance module 160 that may leverage settlement predictions and other data, such as from database 130, to predict borrow requirements, such as cash and/or stock, to determine daily funding projections, analytics module 170 that may inspect current and past settlement predictions and adapt the settlement system based on patterns of settlement predictions and failures and may produce reports with predictions, exposure, and details from risk database 130, clearance and settlement module 180 that may support modernization of settlement failure management functions and may leverage valuable data, such as leveraging settlement predictions and other data, such as from database 130, to generate new product offerings to new or existing clients and customers, such as, for example, intelligent monitoring of pending trade settlements, and further automation of existing settlement review and mitigation workflows. These offerings may provide trader/broker clients with intelligent decision-making integrated into existing manual review workflows to speed up throughput and minimize risk and/or exposure. In addition, operational intelligence module 190 may generate a user interface (UI) presenting predictions and associated risk indicators as well as generating notifications of settlement risk events, such as a violation of risk level thresholds or constraints. Further details of the operation of these components are provided below.

The machine learning model may be a general one for all financial trades, may be specific to a trading client, or may be further specialized for a trade type, or any combination of trade attributes.

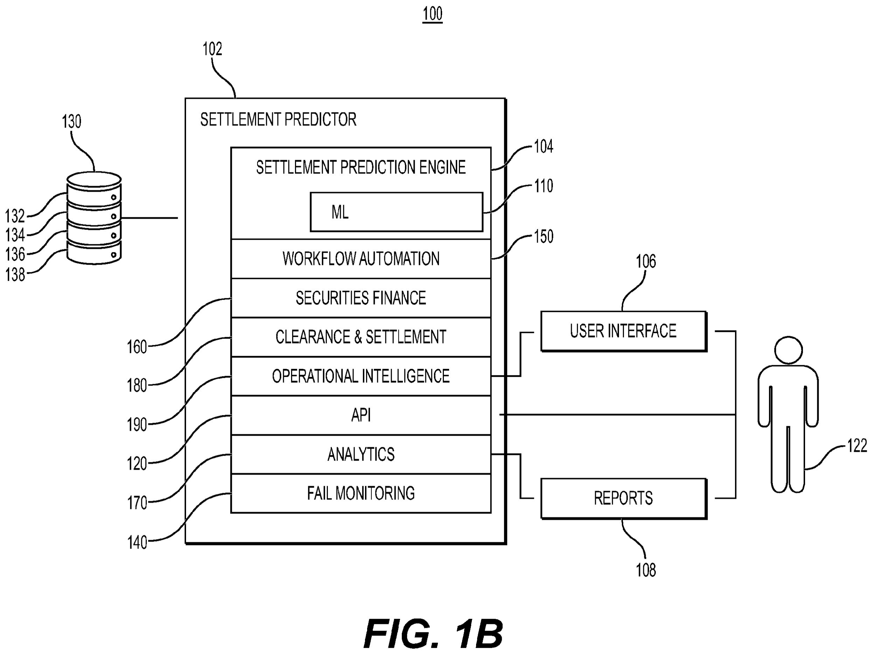

The machine learning framework for transaction settlement prediction of FIG. 1A may be embodied as a computer system, such the system depicted in FIG. 1B. As shown in FIG. 1B, the system may include a settlement predictor 102. Settlement predictor 102 may comprise a settlement prediction engine 104, which may comprise modules for generating prediction of trade settlements including, but not limited to, machine learning module 110. Settlement predictor 102 may further comprise open APIs 120, fail monitoring module 140, workflow automation module 150, securities finance module 160, analytics module 170, clearance and settlement module 180, and operational intelligence module 190, as discussed above.

Database 130 may comprise data relating to, for example, currently executed trades (TD) in database 132, trades for the current settlement day (SD) in database 134, trades one day out from the settlement day (SD-1) in database 136, and trades two days out from the settlement day (SD-2) in database 138. Database 130 may further comprise data relating to past executed trades. Data for each trade represented in database 130 may parameters for each trade, as discussed below, as well as a calculated likelihood that the trade will fail to settle, a most likely reason for settlement failure, an actual failure or settlement date of the trade, and a failure reason of the trade.

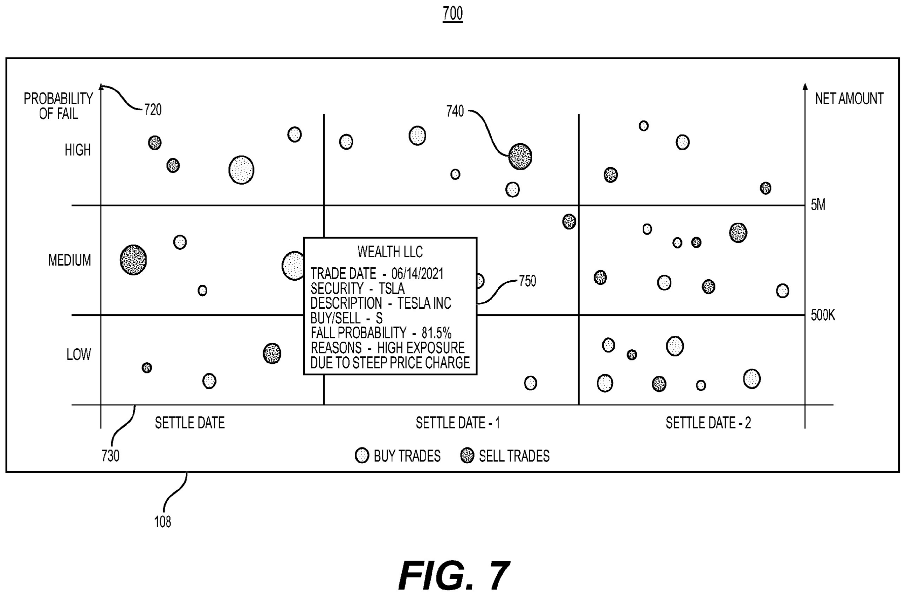

Operational intelligence module 190 may present a user interface 106 to trading user 122. User interface 106 may provide a user, such as trading user 122, with and/or detailed information about settlement failure probabilities of pending financial trades. The details of exemplary user interfaces are discussed below with respect to FIGS. 7-9.

Analytics module 170 may generate reports to be viewed by trading user 122. The reports may include, for example, summaries and trends in trade settlement failures, details of particular trades that have either failed in the past or meet a threshold for failure risk probability. The reports may be customized for the particular needs of the user, such as trading user 122 or a broker dealer. In addition, the reports may be static, or may be dynamic reports presented in an interactive electronic format, possibly including dynamic visual content to possibly provide intuitive insights into pending trade settlements and risks of failed settlements.

Trading user 122 may access APIs 120 to directly access data, including data from database 130 or data generated by settlement prediction engine 104, or access controls and user-specified settings of settlement predictor 102.

User-specified settings of settlement predictor 102, such as may be supplied through APIs 120, a configuration file, or through additional user interfaces, may include settings for a frequency of refreshing the assessment of a trade, a frequency of retraining the mode, a time window for selecting past trades used in training the model, or to tune the model performance, such as by pruning trades to be selected for training the model or to be monitored by the trained model. Pruning may be according to, for example, a type of trade, a quantity or net amount of a trade, a security type or sector, a client, group of clients, or sector of clients, etc. In addition, the machine learning model may be tuned by the setting of a discrimination threshold at which the model determines the trade is likely to fail to settle.

Machine learning model 110 may be a binary classifier, such as may be generated using an XGBoost algorithm with a binary:logistic objective. Tuning parameters for the binary classifier generator may include, for example, a number of estimators, a learning rate, a subsample ratio of the training instances, a maximum depth, a subsample ratio of columns, a minimum child weight, a regularization terms on weights, and a balance of positive and negative weights, etc. Tuning parameters may be supplied through APIs 120, a configuration file, or through additional user interfaces.

The embodiments of FIGS. 1A and 1B are discussed in the context of machine learning module 110. However, the analysis of settlement failure risk need not be limited to machine learning algorithms. Other analysis algorithms such as, for example, statistical models, including regression analysis, and artificial intelligence, including neural networks, etc., may also be used.

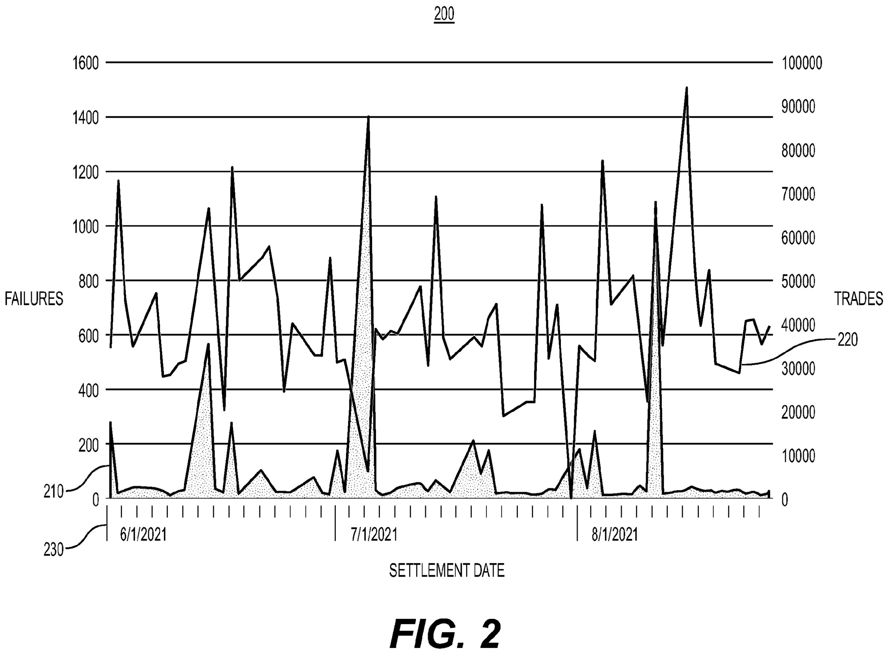

Settlement prediction system 100 may be used to analyze a stream of financial trades, some of which may have failed to settle for one or more reasons. FIG. 2 depicts data 200 relating to a stream of financial trades over a three-month period. As shown in FIG. 2, for each day 230, there may be a number of executed trades 220 and a number of trades that fail to settle 210.

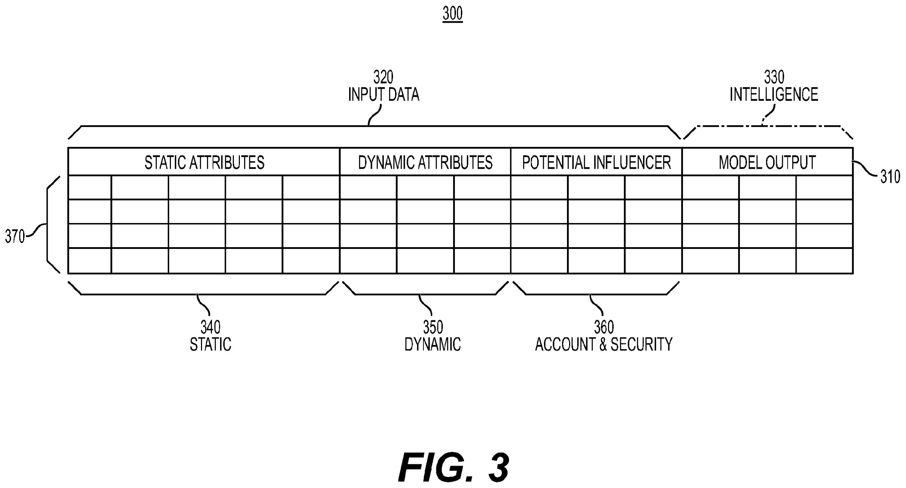

Settlement predictor 102 may receive data relating to stream of financial trades 200, such as through database 130, and may generate a data model representing attributes of each trade and intelligence generated by settlement predictor 102. FIG. 3 depicts such a data model 300. As shown in FIG. 3, data model 300 may include one or more datasets 310, each of which may include data for current and/or past tracked financial trades, possibly including input data 320, which may include attributes of each tracked financial trade, and intelligence data 330, which may include attributes generated by settlement prediction engine 104 such as, for example, a probability of settlement failure, a settlement prediction, and a predicted most likely reason for a settlement failure, etc. Input data 320 may include static attributes 340, dynamic attributes 350, and account and security attributes 360. Data model 300 may include a separate record 370 for each tracked financial trade.

Static attributes 340 do not change during the lifecycle of the trade, and may include, for example, a client account identifier, an identifier of the traded security, a trade quantity or amount, the trade price, trade execution and/or settle dates, trade proceeds delivery instructions, an account type, whether the trade is a buy transaction or a sell transaction, a counterparty to the trade, and a security type or sub-type, etc.

Dynamic attributes 350 may change during the lifecycle of the trade, and may include, for example, a status of matching the trade to a counterparty, an affirmation, a cancellation or correction of the trade, a trade status, trade allocations, depository trust company (DTC) status codes, a current market price of the trade, trade exposure, foreign exchange rate conversion, etc.

Account and security attributes 360 may also change during the lifecycle of the trade, and may include, for example, cash and money market balance of the trading account, a stock record, an account liquidation value, the trading account's recent fail history, a counterparty's recent fail history, any outstanding calls on the trading or counterparty accounts, ease of lending or borrowing the security, etc.

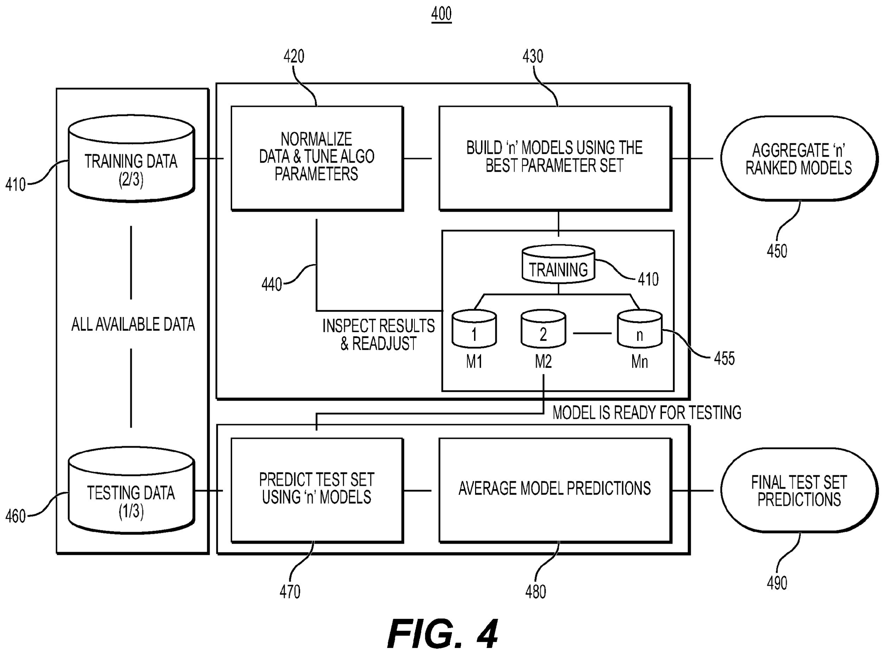

Settlement predictor 102 may use input data 320 of data model 300 to train machine learning module 110 of settlement prediction engine 104. FIG. 4 depicts a process flow of training machine learning model 110, according to one or more embodiments, such as may be performed by settlement predictor 102. As shown in FIG. 4, data model 300 may be divided into a training dataset 410, which may comprise, a first portion of the data from data model 300 such as, for example, one-third of the data from data model 300 relating to past trades, including those trades that were settled or failed to settle. At least a portion of the remaining data from data model 300 relating to past trades may be allocated to a testing dataset 460. The portion of the remaining data from data model 300 allocated to testing dataset 460 may be the entire remaining portion or may be less than the entire remaining portion. For example, testing dataset 460 may exclude trades for a predetermined time period after the last executed trade in training dataset 410, such as, for example, one week, one month, or some other time period. The time period may be determined automatically or may be set by a user-specified configuration. In operation 420, settlement predictor 102 may normalize the data in training dataset 410 and may tune one or more machine learning algorithm parameters, such as, for example, a discrimination threshold at which the model determines the trade is likely to fail to settle. In operation 430, settlement predictor 102 may build a number of machine learning models based on the normalized training dataset 410 and the one or more machine learning algorithm parameters. That is, training data 410 may be used to build N machine leaning models 455, models M₁-Mₙ. In operation 440, settlement predictor 102 may inspect the results for each model 455 and may readjust the one or more machine learning algorithm parameters. Operation 440 may be an entirely automated process or may include some human intervention to assess the results of the built models and manually adjust the algorithm parameters. Operations 420-440 may be performed iteratively until, for example, one or more model quality standards are met, until a predetermined maximum number or iterations are performed, or until human interaction terminates the training process. Once the iterations of operations 420-440 have completed, settlement predictor 102 may, in operation 430, aggregate machine leaning models 455 may be for testing.

Once machine leaning models 455 are ready for testing, settlement predictor 102 may, in operation 470, apply machine leaning models 455 to testing dataset 460 to, for example, predict a likelihood that each financial trade represented in testing dataset 460 failed and a most likely reason for such a failure. In operation 470, settlement predictor 102 may average, or otherwise aggregate, the predictions of machine leaning models 455 to generate final predictions 490 for testing dataset 460.

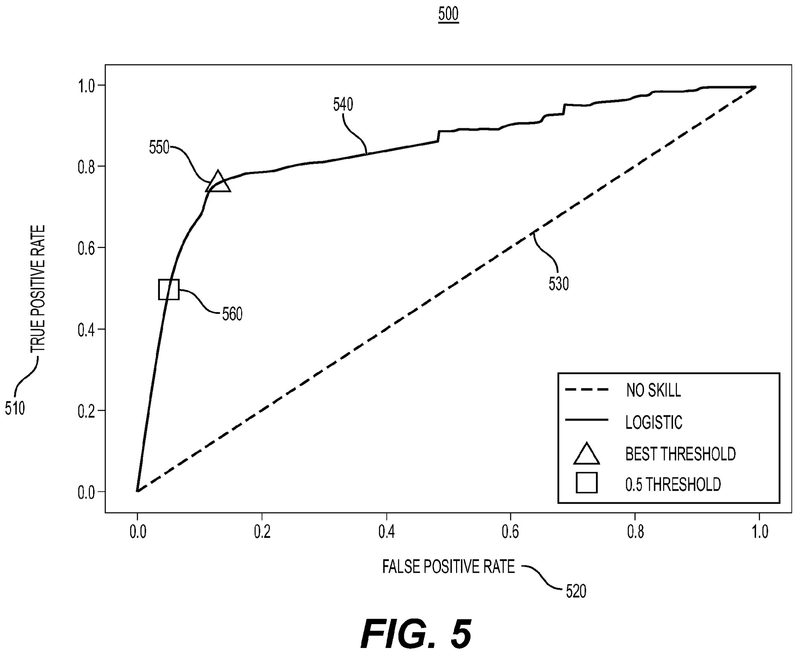

Final predictions 490 for testing dataset 460 may be used to, for example, select a machine learning model 455 to be used for production financial trade settlement predictions, or to further select and tune model parameters. FIG. 5 depicts a machine learning model performance in a system for transaction settlement prediction, shown as a receiver operating characteristic (ROC) graph 500, according to one or more embodiments. As shown in FIG. 5, ROC graph 500 may plot model performance for settings of the discrimination threshold yielding combinations of true positive rates 510 and false positive rates 520. Curve 540 represents the performance of a single model 455 or aggregated models 455. Point 560 represents a 0.5 true positive rate and point 560 represents a best performance discrimination threshold. Curve 530, representing pure chance predictions is provided as reference.

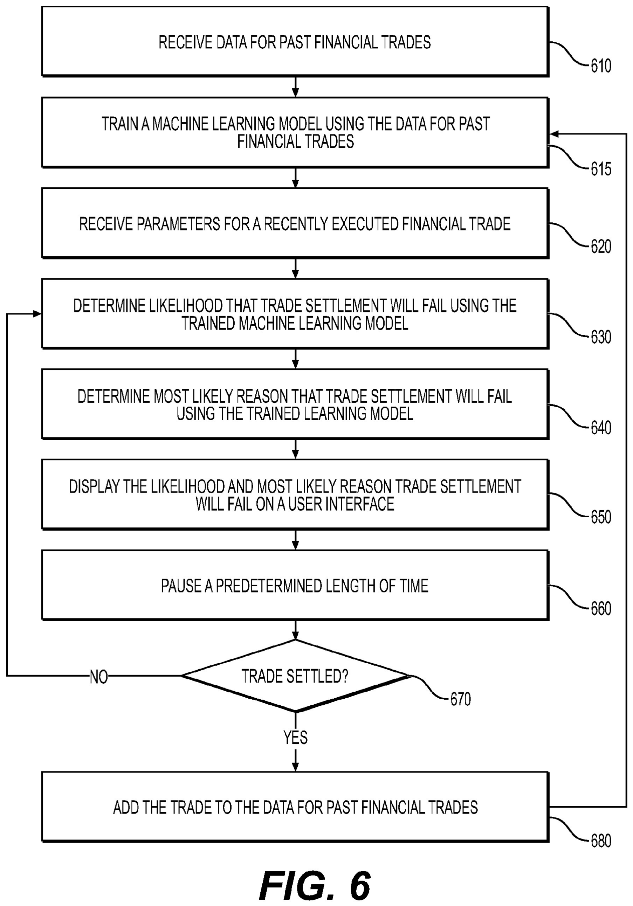

FIG. 6 depicts a flowchart of a method of transaction settlement prediction, according to one or more embodiments. In operation 610, settlement predictor 102 may receive data for past financial trades, such as from database 130. In operation 615, settlement predictor 102 may train a machine learning model using the data for past financial trades, such as through the process depicted in FIG. 4 and discussed in detail above. In operation 620, settlement predictor 102 may receive parameters for a recently executed subject financial trade. In operation 630, settlement predictor 102 may determine likelihood that the trade settlement will fail using the trained machine learning model. In operation 640, settlement predictor 102 may determine most likely reason that the trade settlement will fail using the trained machine learning model. In operation 650, settlement predictor 102 may display the likelihood and most likely reason the trade settlement will fail on a user interface, such as a user interface discussed below with respect to FIGS. 7-9. In operation 660, settlement predictor 102 may pause a predetermined length of time. In operation 670, settlement predictor 102 may determine whether the recently executed financial trade has settled. The pause prior to re-assessing the likelihood of settlement failure may be determined automatically based on the current assessed likelihood, a general user setting, or a specific interval set by a user for this trade. If the recently executed financial trade has not settled, then settlement predictor 102 may return to operation 630. If the recently executed financial trade has settled, then in operation 680, settlement predictor 102 may add the trade to the data for past financial trades, such as database 130 and return to operation 620 to re-train the model based on the updated database 130. Retraining the model may be performed on a set schedule, that is, weekly or monthly, may be performed based on a degradation of performance of the trained model, or may be initiated manually.

As discussed above, settlement predictor 102 may display the likelihood and most likely reason the trade will fail on a user interface, such as are depicted in FIGS. 7-9.

FIG. 7 depicts a user interface 108 for presenting failure probabilities of a transaction, according to one or more embodiments. As shown in FIG. 7, user interface 108 may present representations 740 of financial trades arranged according to a probability of failure 720 and a number of days until expected settlement 730. For example, financial trades may be divided into a high, medium, or low probability of failure, as shown on axis 720. In addition, financial trades for the current settlement date, the next settlement date, and the second settlement date may be depicted. Each financial trade may be depicted by a graphical element such as, for example, a circle (as in FIG. 7) or other shape. The size of each financial trade representation 740 may correspond to, for example, a relative failure risk exposure of the financial trade, a quantity or an amount of the financial trade, or a risk-weighted measure to indicate a relative significance of the financial trade. The metric corresponding to the size of each financial trade representation 740 may be selected according to user preferences. In addition, financial trade representations 740 may be differentiated according to other visual attributes, such as, for example, color or shading, to represent attributes such as, for example, whether the financial trade is a "sell" transaction or a "buy" transaction (as in FIG. 7). If a user selects a financial trade representation 740, the user interface may display financial trade details 750, including, for example, the calculated probability that the financial trade will fail to settle and a most likely reason for failure, as well as other attributes of the financial trade (trade, date, traded security, buy or sell, etc.).

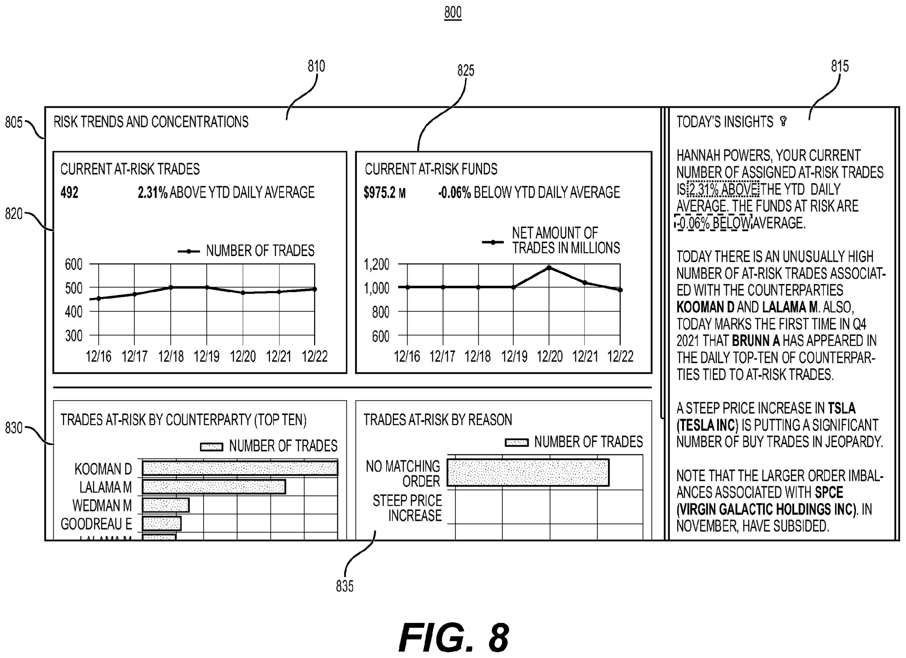

FIG. 8 depicts a user interface 805 displaying information about at-risk transaction settlements, such as may be determined by the methods discussed above, as well as automatically-generated insights into the at-risk transaction settlements, according to one or more embodiments. As shown in FIG. 8, user interface 805 may include a graphical pane 810 and a textual pane 815. Graphical pane 810 may include one or more graphical elements displaying summarized data regarding current at-risk transaction settlements, such as may be determined by the methods discussed above. For example, graphical pane 810 may include a linear graph 820 of a current number of at-risk transaction settlements over time, a linear graph 825 of a cumulative value of current at-risk transaction settlements over time, a bar graph 830 of current at-risk transaction settlements by counterparty, and a bar graph 835 of current at-risk transaction settlements by reason. The selection of graphical elements displayed in graphical pane 810, and the order in which they appear, may be determined by user preferences. Textual pane 815 may display a text description of current trends and other insights for at-risk transaction settlements. The current trends and other insights displayed in textual pane 815 may be automatically generated, and may be specific to a user or may be general for an entire organization.

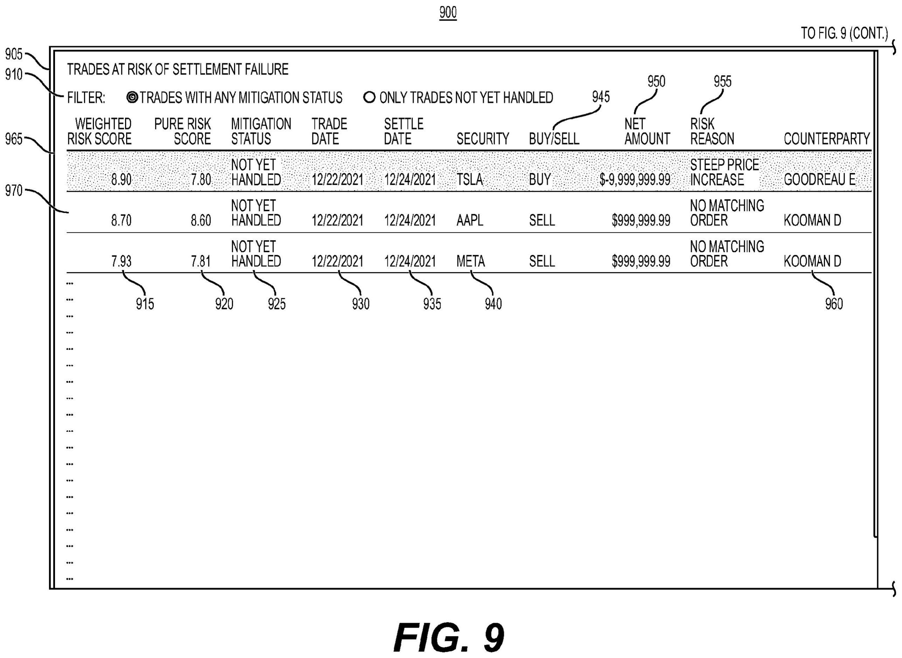

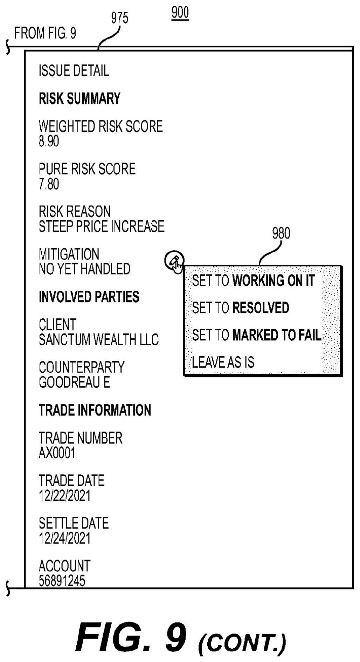

FIG. 9 depicts a user interface 905 displaying information about at-risk transaction settlements, such as may be determined by the methods discussed above, as well as detailed information about a selected at-risk transaction settlement, according to one or more embodiments. As shown in FIG. 9, user interface 905 may include a table pane 965 of at-risk transaction settlements and a detail pane 975 of detailed information about a selected at-risk transaction settlement from table pane 965. Table pane 965 may include one or more filter elements 910 to select a subset of at-risk transaction settlements to display. For example, filters may be selected by mitigation status (as shown in FIG. 9) or by any other attribute of the at-risk transaction settlements. The available filters may be determined by user preferences and may be specific for a user or may be determined generally for an organization. Table pane 965 may include a row 970 for each at-risk transaction settlement meeting the criteria set by filter elements 910. Each row 970 may include detailed information about each at-risk transaction settlement such as, for example, a weighted risk score 915, a raw risk score 920, a mitigation status 925, a trade execution date 930, a settlement date 935, a security identifier 940, a trade type 945 such a buy or sell, a net amount 950 of the transaction, a reason 955 that the transaction may fail to settle, and a counterparty 960 to the transaction. For example, the raw risk score 920 may include straight/automated output from the prediction model. In addition, the weighted risk score 915 may optionally include institution-specific factors that may be weighting. Such weighting may be, for example, manually influenced by users and/or institutions. The institution-specific factors may include, for example an importance of certain clients, knowledge of certain (recent) high risk markets, a specific overweighting of types of trades, or an over-weighting of certain scenarios, etc., and may be considered, for example, where raw risk score 920 provides ambiguous results. The items of detailed formation displayed for each row 970 may be determined by user preferences and may be specific for a user or may be determined generally for an organization. If a user selects a row 970, user interface 905 may display a detail pane 975 of information about the selected at-risk transaction. Detail pane 975 may display detailed information that may include the same information displayed in table pane 965, or may display more or less information, according to user preferences. If a user selects a item of information in detail pane 975, the user may edit the displayed information or other settings relating to the selected at-risk transaction. For example, as shown in FIG. 9, if a user selects the "mitigation" item, the user may be able to change the current mitigation status of the selected at-risk transaction.

Any suitable system infrastructure may be put into place to allow transaction settlement prediction. FIGS. 1A and 1B, and the preceding discussion provide a brief, general description of a suitable computing environment in which the present disclosure may be implemented. In one embodiment, any of the disclosed systems, methods, and/or graphical user interfaces may be executed by or implemented by a computing system consistent with or similar to that depicted in FIGS. 1A and 1B. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, handheld devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

This application is a divisional application of European patent application number 23709892.6 (the "parent" application) also published under number 4473468. The original claims of the parent application are repeated as statements below in the present specification and form part of the content of this divisional application as filed.
Statement 1. A computer-implemented method for transaction settlement prediction, the method comprising:
   receiving data for a plurality of past financial trades;
   training a machine learning model using the data for the plurality of past financial trades;
   receiving one or more parameters for a subject financial trade among a plurality of recently executed financial trades;
   determining a likelihood that the subject financial trade will fail using the trained machine learning model;
   determining a most likely reason that the subject financial trade will fail using the trained machine learning model; and
   presenting the likelihood that the subject financial trade will fail and the most likely reason that the subject financial trade will fail to a user.
Statement 2. The computer-implemented method of statement 1, wherein the likelihood and the most likely reason are presented through a user interface including user interface elements for each financial trade among the plurality of recently executed financial trades, a size of each user interface element indicating the likelihood that the respective financial trade will fail, a quantity of the respective financial trade, an amount of the respective financial trade, or a risk-weighted measure of a significance of the respective financial trade relative to other financial trades among the plurality of financial trades.
Statement 3. The computer-implemented method of statement1, further comprising:
   updating the data for the plurality past financial trades by adding the subject financial trade, the likelihood, the most likely reason, a failure or settlement date of the subject financial trade, and a failure reason of the subject financial trade to the data for the plurality past financial trades; and
   re-training the machine learning model using the updated data for past financial trades.
Statement 4. The computer-implemented method of statement 3, wherein re-training the machine learning model using the updated data for past financial trades is performed after a pause of a predetermined length of time.
Statement 5. The computer-implemented method of statement1, further comprising: pausing a specified period of time;
   updating the likelihood that the subject financial trade will fail using the trained machine learning model; and
   updating the most likely reason that the subject financial trade will fail using the trained machine learning model.
Statement 6. The computer-implemented method of statement 5, wherein the specified period of time is determined automatically based on the likelihood or is a predetermined value.
Statement 7. The computer-implemented method of statement 1, further comprising: tuning a performance of the machine learning model based on user-specified tuning parameters.
Statement 8. A system for transaction settlement prediction, the system comprising: a data storage device storing instructions for transaction settlement prediction in an electronic storage medium; and
   a processor configured to execute the instructions to perform a method including:
   receiving data for a plurality of past financial trades;
   training a machine learning model using the data for the plurality of past financial trades;
   receiving one or more parameters for a subject financial trade among a plurality of recently executed financial trades;
   determining a likelihood that the subject financial trade will fail using the trained machine learning model;
   determining a most likely reason that the subject financial trade will fail using the trained machine learning model; and
   presenting the likelihood that the subject financial trade will fail and the most likely reason that the subject financial trade will fail to a user.
Statement 9. The system of statement 8, wherein the likelihood and the most likely reason are presented through a user interface including user interface elements for each financial trade among the plurality of recently executed financial trades, a size of each user interface element indicating the likelihood that the respective financial trade will fail, a quantity of the respective financial trade, an amount of the respective financial trade, or a risk-weighted measure of a significance of the respective financial trade relative to other financial trades among the plurality of financial trades.
Statement 10. The system of statement 8, wherein the system is further configured for:
   updating the data for the plurality past financial trades by adding the subject financial trade, the likelihood, the most likely reason, a failure or settlement date of the subject financial trade, and a failure reason of the subject financial trade to the data for the plurality past financial trades; and
   re-training the machine learning model using the updated data for past financial trades.
Statement 11. The system of statement 10, wherein re-training the machine learning model using the updated data for past financial trades is performed after a pause of a predetermined length of time.
Statement 12. The system of statement 8, wherein the system is further configured for: pausing a specified period of time;
   updating the likelihood that the subject financial trade will fail using the trained machine learning model; and
   updating the most likely reason that the subject financial trade will fail using the trained machine learning model.
Statement 13. The system of statement 12, wherein the specified period of time is determined automatically based on the likelihood or is a predetermined value.
Statement 14. The system of statement 8, wherein the system is further configured for:
   tuning a performance of the machine learning model based on user-specified tuning parameters.
Statement 15. A non-transitory machine-readable medium storing instructions that, when executed by a computing system, causes the computing system to perform a method for transaction settlement prediction, the method including:
   receiving data for a plurality of past financial trades;
   training a machine learning model using the data for the plurality of past financial trades;
   receiving one or more parameters for a subject financial trade among a plurality of recently executed financial trades;
   determining a likelihood that the subject financial trade will fail using the trained machine learning model;
   determining a most likely reason that the subject financial trade will fail using the trained machine learning model; and
   presenting the likelihood that the subject financial trade will fail and the most likely reason that the subject financial trade will fail to a user.
Statement 16. The non-transitory machine-readable medium of statement 15, wherein the likelihood and the most likely reason are presented through a user interface including user interface elements for each financial trade among the plurality of recently executed financial trades, a size of each user interface element indicating the likelihood that the respective financial trade will fail, a quantity of the respective financial trade, an amount of the respective financial trade, or a risk-weighted measure of a significance of the respective financial trade relative to other financial trades among the plurality of financial trades.
Statement 17. The non-transitory machine-readable medium of statement 15, the method further comprising:
   updating the data for the plurality past financial trades by adding the subject financial trade, the likelihood, the most likely reason, a failure or settlement date of the subject financial trade, and a failure reason of the subject financial trade to the data for the plurality past financial trades; and
   re-training the machine learning model using the updated data for past financial trades.
Statement 18. The non-transitory machine-readable medium of statement 17, wherein retraining the machine learning model using the updated data for past financial trades is performed after a pause of a predetermined length of time.
Statement 19. The non-transitory machine-readable medium of statement 15, the method
   further comprising:
   pausing a specified period of time;
   updating the likelihood that the subject financial trade will fail using the trained machine learning model; and
   updating the most likely reason that the subject financial trade will fail using the trained machine learning model.
Statement 20. The non-transitory machine-readable medium of statement 19, wherein the specified period of time is determined automatically based on the likelihood or is a predetermined value.

## Claims

1. A computer-implemented method for transaction settlement prediction,
the method comprising:
receiving (620) one or more parameters for a subject financial trade among a plurality of recently executed financial trades;
determining (630) a likelihood that the subject financial trade will fail using a trained machine learning model;
determining (640) a most likely reason that the subject financial trade will fail using
the trained machine learning model;
presenting (650) the likelihood that the subject financial trade will fail and the most
likely reason that the subject financial trade will fail to a user;
pausing (660) a specified period of time;
determining (670) whether the subject financial trade has settled;
wherein if the subject financial trade has not settled:
updating the likelihood that the subject financial trade will fail using the trained machine learning model; and
updating the most likely reason that the subject financial trade will fail using the trained machine learning model;
wherein if the subject financial trade has settled:
adding (680) the trade to data for a plurality of past financial trades.

2. The computer-implemented method of claim 1, wherein the likelihood and the most likely reason are presented through a user interface including user interface elements for each financial trade among the plurality of recently executed financial trades, a size of each user interface element indicating the likelihood that the respective financial trade will fail, a quantity of the respective financial trade, an amount of the respective financial trade, or a risk-weighted measure of a significance of the respective financial trade relative to other financial trades among the plurality of financial trades.

3. The computer-implemented method of claim 1, further comprising: updating the data for the plurality past financial trades by adding the subject financial trade, the likelihood, the most likely reason, a failure or settlement date of the subject financial trade, and a failure reason of the subject financial trade to the data for the plurality past financial trades; and re-training the machine learning model using the updated data for past financial trades.

4. The computer-implemented method of claim 3, wherein re-training the machine learning model using the updated data for past financial trades is performed after a pause of a predetermined length of time.

5. The computer-implemented method of claim 1, wherein the specified period of time is determined automatically based on the likelihood or is a predetermined value.

6. The computer-implemented method of claim 1, further comprising: tuning a performance of the machine learning model based on user-specified tuning parameters.

7. A system for transaction settlement prediction, the system comprising: a data storage device storing instructions for transaction settlement prediction in an electronic storage medium; and
a processor configured to execute the instructions to perform a method including:
receiving (620) one or more parameters for a subject financial trade among a plurality of recently executed financial trades;
determining (630) a likelihood that the subject financial trade will fail using a trained machine learning model;
determining (640) a most likely reason that the subject financial trade will fail using the trained machine learning model;
presenting (650) the likelihood that the subject financial trade will fail and the most likely reason that the subject financial trade will fail to a user;
pausing (660) a specified period of time;
determining (670) whether the subject financial trade has settled;
wherein if the subject financial trade has not settled:
updating the likelihood that the subject financial trade will fail using the trained machine learning model; and
updating the most likely reason that the subject financial trade will fail using the trained machine learning model;
wherein if the subject financial trade has settled:
adding (680) the trade to data for a plurality of past financial trades.

8. The system of claim 7, wherein the likelihood and the most likely reason are presented through a user interface including user interface elements for each financial trade among the plurality of recently executed financial trades, a size of each user interface element indicating the likelihood that the respective financial trade will fail, a quantity of the respective financial trade, an amount of the respective financial trade, or a risk-weighted measure of a significance of the respective financial trade relative to other financial trades among the plurality of financial trades.

9. The system of claim 7, wherein the system is further configured for:
updating the data for the plurality past financial trades by adding the subject financial trade, the likelihood, the most likely reason, a failure or settlement date of the subject financial trade, and a failure reason of the subject financial trade to the data for the plurality past financial trades; and
re-training the machine learning model using the updated data for past financial trades.

10. The system of claim 9, wherein re-training the machine learning model using the updated data for past financial trades is performed after a pause of a predetermined length of time.

11. The system of claim 7, wherein the specified period of time is determined automatically based on the likelihood or is a predetermined value

12. The system of claim 7, wherein the system is further configured for: tuning a performance of the machine learning model based on user-specified tuning parameters.

13. A non-transitory machine-readable medium storing instructions that, when executed by a computing system, causes the computing system to perform a method for transaction settlement prediction, the method including:
receiving (620) one or more parameters for a subject financial trade among a plurality of recently executed financial trades;
determining (630) a likelihood that the subject financial trade will fail using a trained machine learning model;
determining (640) a most likely reason that the subject financial trade will fail using the trained machine learning model;
presenting (650) the likelihood that the subject financial trade will fail and the most likely reason that the subject financial trade will fail to a user;
pausing (660) a specified period of time;
determining (670) whether the subject financial trade has settled;
wherein if the subject financial trade has not settled:
updating the likelihood that the subject financial trade will fail using the trained machine learning model; and
updating the most likely reason that the subject financial trade will fail using the trained machine learning model;
wherein if the subject financial trade has settled:
adding (680) the trade to data for a plurality of past financial trades.

14. The non-transitory machine-readable medium of claim 13, wherein the likelihood and the most likely reason are presented through a user interface including user interface elements for each financial trade among the plurality of recently executed financial trades, a size of each user interface element indicating the likelihood that the respective financial trade will fail, a quantity of the respective financial trade, an amount of the respective financial trade, or a risk-weighted measure of a significance of the respective financial trade relative to other financial trades among the plurality of financial trades.

15. The non-transitory machine-readable medium of claim 13, the method further comprising:
updating the data for the plurality past financial trades by adding the subject financial trade, the likelihood, the most likely reason, a failure or settlement date of the subject financial trade, and a failure reason of the subject financial trade to the data for the plurality past financial trades; and
re-training the machine learning model using the updated data for past financial trades.
